# EUROPEAN PATENT APPLICATION

(11) **EP 4 632 600 A1**
(43) Date of publication of application: **15.10.2025**
(21) Application number: 24170090.5
(22) Date of filing: 12.04.2024
(51) Int. Cl.: G06F 16/332, G06F 16/33, G06F 16/36

(54) **QUERYING METHOD AND SYSTEM**

(71) Applicant: Senseful AI Ltd, Exeter EX4 3SR (GB)
(72) Inventor: SHORT, William, Exeter, EX4 3SR (GB)
(74) Representative: Gill Jennings & Every LLP

(57) **Abstract**

There is provided a computer-implemented querying method using a knowledge base, the computer-implemented method comprising: obtaining the knowledge base comprising: a large language model (LLM); and lexical-conceptual ontology data representative of a lexical-conceptual ontology comprising a plurality of nodes and a plurality of edges connecting the nodes; wherein the plurality of nodes represent lemmas and concepts; and wherein the plurality of edges represent relation types between the nodes; obtaining a model query; resolving the model query against the lexical-conceptual ontology or the LLM based on the model query; and outputting a query result.

## Description

### FIELD OF THE INVENTION

The present invention relates to a querying method and system using a knowledge base, and more particularly to a querying method and system using a knowledge base comprising a lexical-conceptual ontology and a large language model (LLM).

### BACKGROUND

As information stores, graph-like ontologies and large language models (LLMs) differ significantly in their underlying representation of knowledge and afford distinct advantages for information retrieval. Ontologies represent knowledge in highly structured, normally hierarchical forms, whereas an LLM captures knowledge as statistical patterns in text data. Ontologies therefore lend themselves to queries seeking precise classifications of information expressed in terms of predefined categories and category relations, whilst LLMs lend themselves to queries seeking broad-based, generalized summative answers expressed in natural language utterances. Though often derived from specific datasets in programmatic ways, neither, however, is inherently linked to source documents in the sense that querying the knowledge base produces, or can produce, the sources on which they are based, nor can the knowledge captured by these information stores be utilized directly in querying external document collections.

Furthermore, methodologies for querying a dataset or database using a literal string-matching search system possess no knowledge base and thus can require significant computational demands for the underlying hardware system implementing the search system. The computational demands of the underlying hardware system can be represented in terms of the number of discrete queries required of a comprehensive search using a literal string-matching search system, multiplied by the time required for each search. For a dataset of significant size, each query can take a significant amount of time. Thus, the time taken to adequately execute the query using the literal string-matching search system can be time consuming.

The present invention has been devised to address at least some of the aforementioned problems.

### SUMMARY OF INVENTION

In accordance with a first aspect, there is provided a computer-implemented querying method using a knowledge base, the computer-implemented method comprising: obtaining the knowledge base comprising: a large language model (LLM); and lexical-conceptual ontology data representative of a lexical-conceptual ontology comprising a plurality of nodes and a plurality of edges connecting the nodes; wherein the plurality of nodes represent lemmas and concepts; and wherein the plurality of edges represent relation types between the nodes; obtaining a model query; resolving the model query against the lexical-conceptual ontology or the LLM based on the model query; and outputting a query result.

The knowledge base may be understood as one or more sets of data comprising the lexical-conceptual ontology and the LLM. The lexical-conceptual ontology may be a premade lexical-conceptual ontology comprising data structured similar to the known WordNet graph in that the main data structures are lemmas (words with associated linguistic metadata), synsets (concept definitions), semfields (concept groupings), lexical relations of specific kinds (relations between words), and semantic relations of certain specific kinds (relations between synsets/concepts). However, the lexical-conceptual ontology may include additional relation types which extend the structure of the ontology and constitute new relational data. The LLM may be a pretrained LLM trained on a plurality of text datasets. The LLM may be intermittently updated by training it on more text data.

The lexical-conceptual ontology may capture knowledge abouts words, concepts, and their relations. The lexical-conceptual ontology may represent lexical and semantic knowledge created through use of a language, namely the words or phrasal lexical items and concepts, and relationships of various structured and defined types that exist between. The lexical-conceptual ontology may capture the more stable, most conventionalized elements of linguistic knowledge.

The querying method of the present invention may advantageously provide a means for utilising the technical strengths of both the lexical-conceptual ontology and the LLM based on the model query. For example, a query may comprise a source node "animal" and a relation type "adjective descriptors of hyponyms of animal". This query may combine one or more sub-queries. In this example, a first sub-query comprises the source node "animal" and the relation type "hyponyms of'. This first sub-query may be resolved against the lexical-conceptual ontology to generate a first sub-query result comprising one or more source nodes. A second sub-query may comprise the one or more source nodes of the first sub-query result and the relation type "adjective descriptors of". This second sub-query may not be suitable for resolution against the lexical-conceptual ontology, which may not capture the "adjective descriptors of" relation type. Instead, the second sub-query may be resolved against the LLM to provide the output query result. Thus, it can be seen that the present query method may advantageously provide a means for resolving queries that may not otherwise be resolved against an ontology or an LLM.

In some embodiments, obtaining the model query comprises: obtaining a query term; identifying a query node based on the query term; obtaining a relation type; and generating the model query, the model query comprising: the query node; and the relation type. The query node may be a node of the lexical-conceptual ontology and the relation type may be an edge type of the lexical-conceptual ontology. In this way, the model query may be resolved in terms of the lexical-conceptual ontology, which can improve the querying capabilities of the method.

In some embodiments, resolving the model query against the LLM comprises: generating a prompt based on the query node and relation type; and executing the prompt against the LLM. The prompt may be generated by selecting a prompt structure from a plurality of template prompt structures. In this way, the method may provide a means for automatically generating and executing a prompt against the LLM based on the model query, the prompt being in terms of the lexical-conceptual ontology. Advantageously, the output of the LLM may also be in terms of the lexical-conceptual ontology, thereby improving the output.

In some embodiments, resolving the model query against the lexical-conceptual ontology and/or the LLM based on the model query comprises: determining whether to resolve the model query against the lexical-conceptual ontology or the LLM by: determining a query type variability of the query type of the model query; and resolving the model query against the LLM if the query type variability of the query type is greater than or equal to the query type variability threshold or resolving the model query against the lexical-conceptual ontology if the query type variability of the query type is less than the query type variability threshold. In this way, the model query can be routed to the more appropriate knowledge base component, thereby improving a querying efficiency.

In some embodiments, determining the query type variability of the query type of the model query comprises: obtaining a plurality of responses to the query type, each response corresponding to a different time period; and determining the query type variability based on the plurality of responses. In this way, the query type variability can be determined in a manner that accounts for changes in the use of language over time such that the model query is resolved against the lexical-conceptual ontology or the LLM depending on how much the query type varies overtime. Advantageously, the model query may be routed to the more appropriate component of the knowledge base. This may be advantageous because the LLM may more appropriately capture changes in the use of language over time.

In some embodiments, the method further comprises, after resolving the model query against the LLM: resolving the query result into terms of the lexical-conceptual ontology. In this way, the query result may comprise more useful information. Notably, the output of the LLM may be used as a source node for a subsequent model query (or sub-query) for resolution against the lexical-conceptual ontology.

The method of the first aspect preferably further comprises: generating a conceptual reverse index and a vector index based on the ingested dataset; and executing the query result against the conceptual reverse index and/or the vector index to generate one or more text results. The conceptual reverse index may be understood as an index that indexes entities according to concepts. This is in contrast to standard reverse indexing which indexes words directly. A method for querying a dataset that significantly reduces computational demands of an underlying system may therefore be provided. In particular, the model query can be generated and resolved once to achieve the same effect as a larger number of queries by a keyword-based search system against an index.

Generating the conceptual reverse index may comprise: determining a concept associated with each text portion present in the ingested dataset; collating one or more text portions having the same concept under a shared conceptual identifier; and assigning a locational reference to each text portion. Determining the concept associated with a text portion may be achieved via word-sense disambiguation techniques. Thus, the method comprises generating conceptual reverse indexes in terms of the model.

In some embodiments, determining a concept associated with each text portion present in the dataset comprises: identifying a plurality of concepts associated with the text portion; generating a conceptual selection prompt based on the plurality of concepts; inputting the conceptual selection prompt to the LLM; and receiving a conceptual selection output from the LLM. Identifying one or more concepts associated with the text portion may be achieved via word-sense disambiguation techniques. Thus, each text portion may be resolved to a plurality of conceptual identifiers.

Generating the vector index may comprise: assigning a unique vector representation to each text portion present in the ingested dataset; and assigning a locational reference to each text portion present in the ingested dataset.

Executing the query result against the conceptual reverse index and/or the vector index may comprise: determining one or more concepts of the query result; and identifying one or more portions of text having conceptual identifiers corresponding to the one or more concepts. In this way, the present invention may provide a means for quickly finding portions of text, and conceptually similar portions of text within an ingested dataset. Advantageously, more useful results may be provided using fewer queries, thus reducing a computational load required by the underlying system.

In some embodiments, the method further comprises updating the lexical-conceptual ontology, wherein updating the lexical-conceptual ontology comprises: determining one or more new relations and generating one or more second nodes and/or one or more second edges based on the one or more new relations. In some embodiments, updating the lexical-conceptual ontology is in response to: an LLM output; a plurality of model queries; and/or ingestion of a dataset. In this way, the ontology may be enriched overtime such that more useful information is provided. By incorporating the dataset into the lexical-conceptual ontology, the lexical-conceptual ontology may be modified to the extent that a user-specific portion is generated in line with the new node and relations generated because of the ingestion. Also, a query against the lexical-conceptual ontology may be a query against the dataset.

In accordance with a second aspect, there is provided a querying system using a knowledge base, the system comprising: processor; a lexical-conceptual ontology database communicatively coupled to the processor and storing a lexical-conceptual ontology data thereon, the lexical-conceptual ontology data representing a lexical-conceptual ontology comprising a plurality of nodes and a plurality of edges connecting the nodes; wherein the plurality of nodes represent lemmas and concepts; and wherein the plurality of edges represent relation types between the nodes; a large language model (LLM) module communicatively coupled to the processor; and a storage unit communicatively coupled to the processor and storing processor-executable instructions thereon that, when resolved by the processor, cause the system to carry out the steps of the method of the first aspect.

In accordance with a third aspect, there is provided a computer-implemented method for updating a lexical-conceptual ontology, the computer-implemented method comprising: obtaining a lexical-conceptual ontology, the lexical-conceptual ontology comprising a plurality of nodes and a plurality of edges connecting the nodes; wherein the plurality of nodes represent entities; and wherein the plurality of edges represent relationships between the nodes; determining one or more new relations; and generating one or more second nodes and/or one or more second edges based on the one or more new relations. The computer-implemented method according to the third aspect may provide a means for scaling the lexical-conceptual ontology.

Determining one or more new relations may comprise: generating a relation query; inputting the relation query to a Large Language Model, LLM; and receiving a relation input from the LLM, the relation input comprising the one or more new relations. By updating according to an output of the LLM, lexical, conceptual, and relational information can be derived in order to capture semantic knowledge at scale and as it develops through practical language use in time. In particular, LLMs are typically trained on diverse and extensive text datasets that encompass a broad spectrum of human knowledge and language use.

Determining one or more new relations may further comprise determining that the one or more new relations meet an input threshold prior to updating the lexical-conceptual ontology. The input threshold may be a minimum number of instances that the new relation appears in relation inputs from the LLM. Thus, new relations that frequently occur in the relation inputs form the LLM may be added to the lexical-conceptual ontology. The relation query may comprise: a relation, the relation being a lexical and/or semantic relation; one or more query parameters; and a prompt structure. Preferably, a relation query is generated for each node of the lexical-conceptual ontology. Preferably, the relation query is periodically generated and input to the LLM.

Determining the one or more new relations may comprise: receiving a plurality of lexical-conceptual queries; determining that one or more of the plurality of lexical-conceptual queries comprise an uncaptured relation; and in response to an input threshold being met, determining that the uncaptured relation is a new relation. The term "uncaptured relation" may refer to a relation (i.e., a node and an edge) that is not already captured by the lexical-conceptual ontology.

Determining one or more new relations may comprise: ingesting a dataset; and determining the one or more new relations based on the ingested dataset. The one or more new relations may be determined using named entity recognition and entity extraction and/or a vector-based language model. The one or more second nodes and/or the one or more second edges may be generated by: identifying a source node, a target node, and an edge type; adding the one or more second nodes and/or the one or more second edges based on the source node, the target node, and the edge type. It will be understood that second nodes are only added when the source node and/or target node is not already present in the lexical-conceptual ontology.

In accordance with a fourth aspect, there is provided a system for updating a lexical-conceptual graph database, the system comprising: processor; a lexical-conceptual ontology database communicatively coupled to the processor and storing a lexical-conceptual ontology thereon, the lexical-conceptual ontology comprising a plurality of nodes and a plurality of edges connecting the nodes; wherein the plurality of nodes represent entities; and wherein the plurality of edges represent relationships between the nodes; an input means for receiving an input query from a user; and a storage unit communicatively coupled to the processor and storing processor-executable instructions thereon that, when resolved by the processor, cause the system to carry out the steps of the method according to the third aspect.

### BRIEF DESCRIPTION OF DRAWINGS

At least one embodiment of the present disclosure will now be described, purely by way of example, with reference to the accompanying figures, in which:
Figure 1 shows a system for implementing one or more methods of the present disclosure;
Figure 2 shows a flow diagram of a method for generating a lexical-conceptual ontology;
Figure 3A shows a flow diagram of a method for querying the lexical-conceptual ontology;
Figure 3B shows an example model query specification as an ontology partial;
Figure 4A shows a flow diagram of a method for updating the lexical-conceptual ontology;
Figure 4B shows a flow diagram of a method for determining one or more new relations;
Figure 4C shows a flow diagram of a further method for determining one or more new relations;
Figure 4D shows a flow diagram of a further method for determining one or more new relations;
Figure 5A shows a flow diagram of a method for querying a dataset using the lexical-conceptual ontology;
Figure 5B shows an example lexical-conceptual ontology comprising a plurality of nodes and a plurality of relations; and
Figure 5C shows a new sub-graph of the lexical-conceptual ontology depicted in Figure 5B.

### DETAILED DESCRIPTION

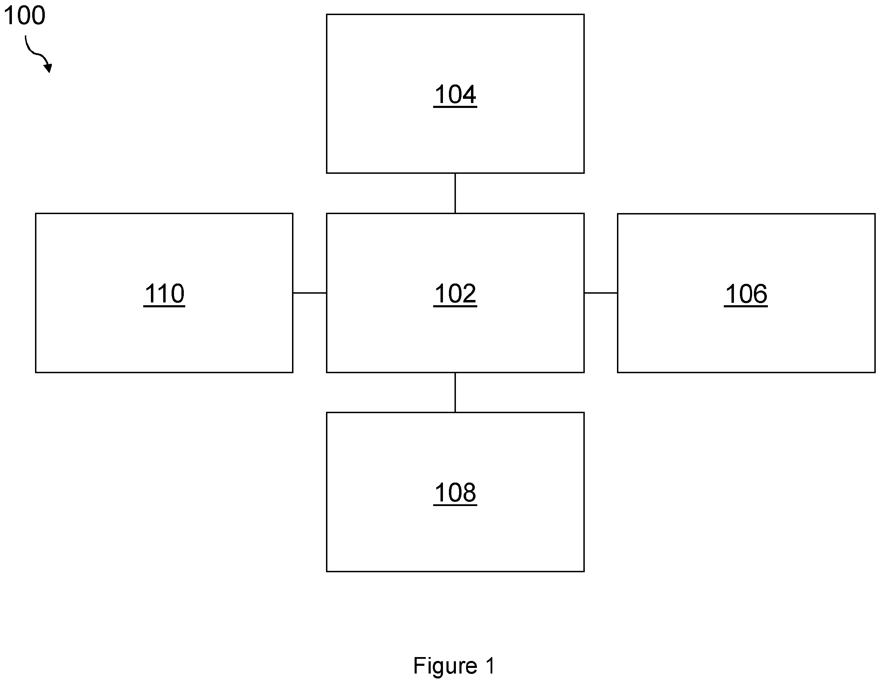

Figure 1 shows a query system 100 for implementing one or more methods of the present disclosure. The system 100 comprises: a processor 102; a lexical-conceptual ontology database 104; a large language model (LLM) module 106.

The processor 102 may comprise one or more processors 102 arranged to carry out the method steps according to any aspect of the present disclosure.

The lexical-conceptual ontology database 104 is communicatively coupled to the processor 102 and arranged to store a lexical-conceptual ontology thereon. The lexical-conceptual ontology may be understood as a set of entities connected by edges. The set of entities comprises lemmas (i.e., uninflected word forms) and concepts (i.e., unique identifiers distinguished by part of speech). The edges represent lexical, semantic, or conceptual relation types. The lexical-conceptual ontology may be represented by a graph structure, wherein the entities are represented as nodes and the relations are represented as edges between the nodes.

The processor 102 is communicatively coupled to a large language model (LLM) module 106. The LLM module 106 may be stored on a local storage unit or remote server storing processor-executable instructions thereon that, when resolved by the processor, cause the system to execute an LLM 106. The processor 102 may communicate via an LLM API.

The system 100 also comprises a storage unit 108 communicatively coupled to the processor 102 and storing processor-executable instructions thereon that, when resolved by the processor 102, cause the system 100 to carry out method steps according to any aspect of the present disclosure.

The system 100 also comprises an input means (not shown) and corresponding input interface communicatively coupled to the processor 102. The input means provides a means for a user to interact with the system, for example via an application resolved by the processor.

The processor 102 may also be communicatively coupled to a natural language processing (NLP) module 110. The NLP module 110 may be stored on a local storage unit or remote server storing processor-executable instructions thereon that, when resolved by the processor, cause the system 100 to execute an NLP algorithm.

### Lexical-conceptual Ontology Generation

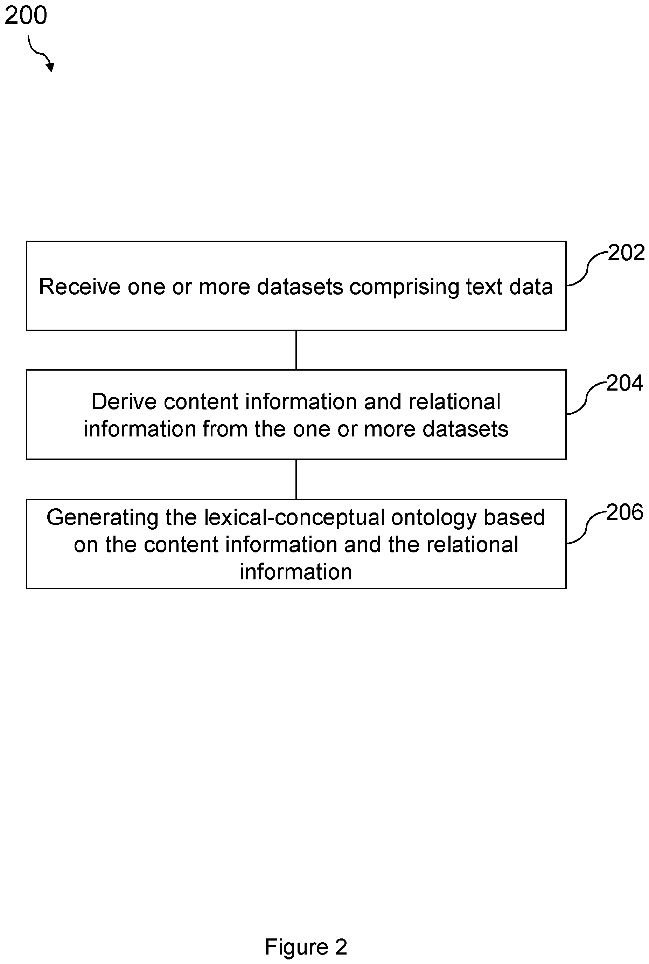

Figure 2 shows an exemplary method 200 for generating a lexical-conceptual ontology (which may also be referred to herein as "ontology"). The method 200 may be implemented using the system 100.

Step 202 of the method comprises receiving one or more datasets comprising text data. The one or more datasets may comprise one or more txt or doc files comprising text data. It will be understood that the type of dataset is not limited, as long as text data is present. It will be envisaged that an image file may be received, and a text extraction step may be performed, for example using Optical Character Recognition (OCR).

Step 204 comprises deriving content information and relational information from the one or more datasets. The content information and relational information is derived from the one or more datasets using known named entity extraction techniques. These techniques are implemented via the NLP algorithm of the NLP module.

Step 206 comprises generating the ontology based on the content information and the relational information. In particular, the processor 102 generate the ontology by storing each lemma and concept as a respective node on the ontology database 104 and storing each relation type as edges between the appropriate lemmas and concepts. The processor 102 also stores descriptive data on the ontology database, the descriptive data being a description of each lemma and concept. The descriptive data comprises grammatical categories and definitions.

### Querying Using the Knowledge Base

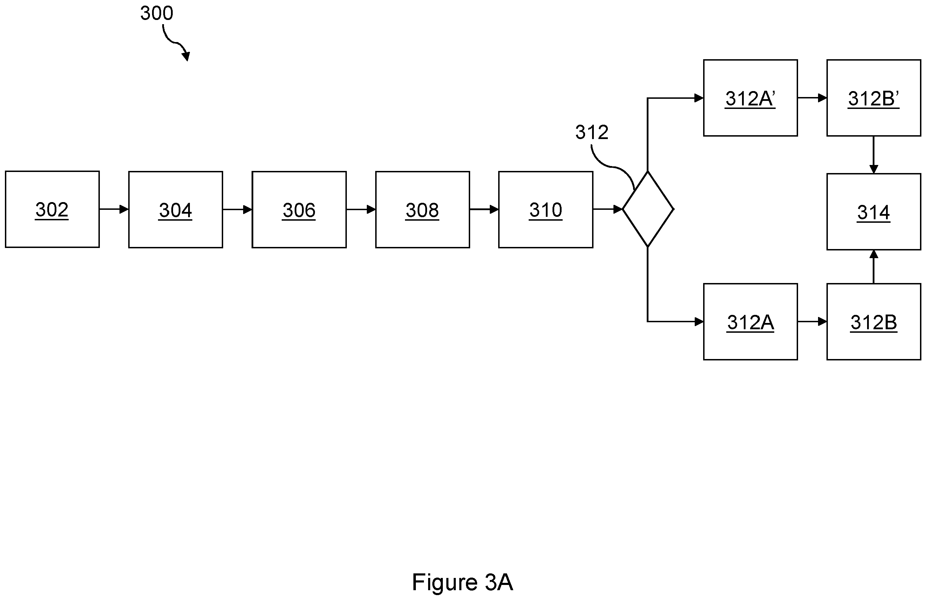

The knowledge base can be used for queries. Figure 3A shows an exemplary querying method 300 using the knowledge base. The method 300 may be implemented using the system 100.

Step 302 comprises obtaining the knowledge base. The knowledge base comprises the LLM of the LLM module 106 and the ontology. Thus, it will be understood that comprising the LLM means that the LLM is useable as part of the knowledge base. In particular, the processor 102 can obtain or retrieve the ontology from the ontology database 104. Furthermore, the processor 102 can communicate with the LLM module 106 to utilise the LLM.

Step 304 comprises obtaining a query term. The query term is typically obtained from a user. The processor 102 may be communicatively coupled to a query input means, such as an application associated with the knowledge base. A user can input the query term to an interface provided by the application. For example, the user may input the query term "bank" as part of a larger query via the interface provided by the application.

Step 306 comprises identifying a query node based on the query term. The ontology may comprise a single node that matches the query term. In this case, the query node is the query term. In some cases, the ontology comprises more than one node that matches the query term. In these cases, obtaining the query node comprises disambiguating the query term. The processor 102 can cause the application to present an interface that allows the user to facilitate identification of the query node. The presented interface is based on the ontology. The presented interface comprises options that are provided by the descriptive data of the ontology. In particular, the presented interface provides grammatical category options and definition options.

For example, the query term "bank" may have a plurality of corresponding nodes in the ontology. The application presents an interface having a list of grammatical category options of each node, and corresponding definition options. The user may input a first selection that the term input "bank" is a noun from the grammatical category options, and a second selection that the term input "bank" means "a financial institution that accepts deposits and channels the money into lending activities" from the definition options. Thus, step 306 provides a precise node for which the query is to be resolved with.

The query node is represented by: a lemma or concept identifier; a part of speech (POS) identifier; and a concept definition. The POS identifier identifies a part of speech (e.g., noun, verb, adjective, or adverb) of a lemma. The concept identifier is representative of the grammatical category of the term input. The concept definition is representative of the definition of the term input.

Step 308 comprises obtaining a relation type. The user can input the relation type to the interface provided by the application. For example, the user may input the relation type "symbolizations" to the interface provided by the application. This may occur at the same time as inputting the query term.

Step 310 comprises generating a model query. The model query comprises the query node obtained in step 306 and the relation type obtained in step 308. Therefore, the graph ontology provides a structured mechanism for querying LLMs and there is information flow from the ontology to the LLM in the form of linguistic and conceptual knowledge in the construction of prompts as part of queries. The model query is generated utilizing information from the ontology.

The model query can alternatively consist of a relation type only. For example, the model query may comprise the "slang" relation type, without specifying any source node. This model query, when resolved against the ontology, would return all node pairing linked through this relation.

The model query can also consist of a source entity only. A model query specification consisting of a single node, for example "cat" would, in effect, be similar to a literal keyword query (against the ontology or against organisational reverse indexes) or similar to a semantic-similarity query (against organisational vector indexes). This model query, when resolved against the ontology, would return all nodes connected to the source node (in this case, "cat") via any relational edge.

The model query may comprise a first sub-query and a second sub-query. For example, the model query "adjective descriptors of hyponyms of animal" may comprise a first sub-query comprising the source node "animal" and the relation type "hyponyms of', and a second sub-query comprising the source nodes of the first sub-query and the relation type "adjective descriptors of".

Accordingly, steps 304 to 310 provide a means for obtaining a model query.

Step 312 comprises resolving the model query against the ontology and/or the LLM based on the model query.

Step 312 typically further comprises determining whether to resolve the model query against the ontology or the LLM.

This determination may be based on the query type. For example, the processor 102 may access a lookup table comprising entries corresponding to relations of the ontology, and each relation may have a corresponding record that the processor 102 can use to determine which of the ontology or the LLM to resolve the model query against.

Alternatively, this determination may be based on a user input. In particular, the application may present an option to the user to select either the ontology or the LLM.

Alternatively, this determination may be based on a query type variability threshold of the query type of the model query being met. More particularly, if a query type variability of the query type is greater than or equal to the query type variability threshold, the model query is routed and resolved against the LLM. If the query type variability of the query type is less than the query type variability threshold, the model query is routed against the ontology. In some examples, the query type variability threshold is 20%. The query type variability is a metric representative of how much the response to a query of that query type varies over time. The query type variability associated with each query type may be stored in a datastore associated with the system 100. In particular, each relation (i.e., edge) and an associated query type variability are stored in a lookup table on the datastore.

Therefore, step 312 typically further comprises determining whether to resolve the model query against the ontology or the LLM by: determining a query type variability of the query type of the model query; and resolving the model query against the LLM if the query type variability of the query type is greater than or equal to the query type variability threshold; or resolving the model query against the ontology if the query type variability of the query type is less than the query type variability threshold.

The query type variability of the query type is determined based on a text dataset comprising data published over a time period. Determination of the query type variability may comprise obtaining a plurality of responses to the query type, each response corresponding to a different time period; and determining the query type variability based on the plurality of responses. Obtaining the plurality of responses can be achieved by inputting the query type into a plurality of LLMs, each trained on a text dataset comprising text data associated with different time periods. Thus, each LLM is trained with text data from a different time period and the output of the LLM is indicative of the query type variability. The text dataset may comprise sample texts taken from the Corpus of Contemporary American English (COCA), which is a corpus of American English that contains more than one billion words of text over a thirty-year time period (from 1990 to 2019). The query type variability can be determined based on the plurality of responses by determining a proportion of the responses that are different. For example, if the plurality of responses correspond to 5 time periods, and only 1 response is different to the other 4, then the variability can be quantified as 20%.

In an example implementation, the plurality of time periods may each consist of a two-year period. It will be appreciated that the text dataset may be refreshed periodically so as to keep the query type variability up to date. Query types such as "rhymes of 'sing'" will be unlikely to change much between each two-year time period and will therefore have a low query type variability value (e.g., 0%). Thus, query types "rhymes of..." will be routed to the ontology. Query types such as "image connotations of neural network" are likely to change significantly over time and may therefore have a high query type variability value (e.g., 40%). Thus, query types including "image connotations..." will be routed to the LLM.

Generally speaking, the ontology captures linguistic and semantic information that is invariable or highly unlikely to vary by context or through time. This is partially for historical reasons (i.e. relating to the origins of the LCO in the Princeton WordNet) but also partially by design (i.e. relating to considerations of efficiency of access, computational load, and changeability of data). For example, the ontology captures information about derivational relationships between words, part of speech information, and definitional information - which are `facts' of language that either do not change based on context or over time, or that change at a rate that does not present a computational obstacle (i.e. changes could be programmatically made to the ontology with very little processing costs).

The ontology can also be expanded to include information about further relationships, for example information about rhyming (including alliteration and assonance) relationships. Again, although this information about these kinds of information may not be presently captured by the ontology, they are linguistic facts that are not subject to variation by context (sound rhymes with pound no matter the context in which these words appear). Even if new words are added to the ontology, the addition of new rhyming relations would not be of such a volume to make modification prohibitive.

The LLM component of the modular data model on the other hand captures information that may be highly variable by context - whether that context is regional, dialectical, cultural, discursive, social, generic, or any other kind - or likely to change significantly over time. For example, appropriate responses to a query like adjective descriptors of 'rocket launches' are highly likely to differ by the context of discourse (rocket launches would be characterised very differently in the context of space exploration as in a military context). Similarly, responses to a query like image associations of 'love' are likely to vary depending on cultural context.

Resolving 312A' the model query against the ontology comprises generating an ontology partial or ontology fragment, and matching 312B' the ontology partial or ontology fragment against the ontology (in the virtual sense) to generate a query result.

Resolving 312 the model query against the LLM comprises generating 312A a prompt based on the query node and relation type; and executing 312B the prompt against the LLM. The prompt may be generated by selecting a prompt structure from a plurality of template prompt structures. A loop-up table of prompt structures may be stored in a datastore in communication with the processor 102. For example, a prompt structure associated with the relation type "alliterations" may be "[In the context of X], what words begin with the same sound as the X 'Y'], wherein Y is the source node and X is a result of sense disambiguation.

The model query often comprises a source entity (i.e., a source node) and a relation type. For example, the source node may be "animal" and the relation type may be "hyponyms of'. The results of this example query are intended to return nodes that respond to this query structure within the ontology. A more complex query may comprise the source node "animal" and the relation type "adjective descriptors of hyponyms of animal". Thus, a single complex query may combine one or more sub-queries. In this example, a first sub-query comprises, the source node "animal" and the relation type "hyponyms of", and a second sub-query comprises the source nodes of the first sub-query and the relation type "adjective descriptors of'. In this example, the first sub-query would be resolved against the ontology, and the second sub-query would be resolved against the LLM.

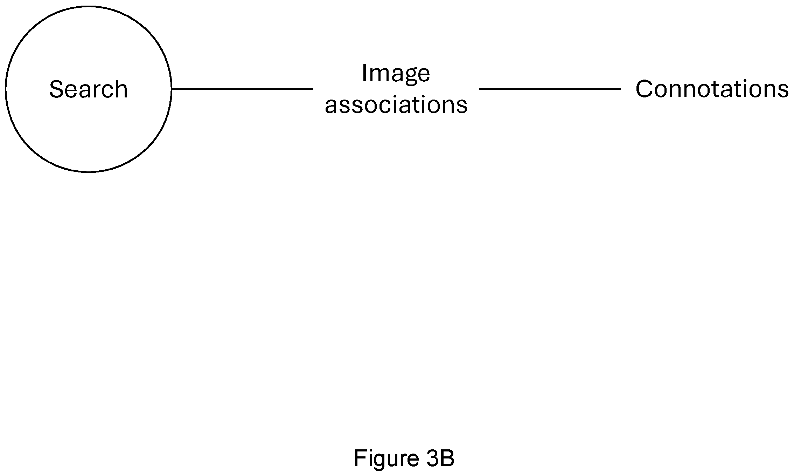

Figure 3B shows an example model query as an ontology partial. In the model query specification, the user inputs a query term to find concepts that are associated with any of the images commonly associated with the concept "search". A model query is generated (step 310) as "connotations of image associations of search". This ontology partial can be resolved against the ontology.

Step 314 comprises outputting a query result. The query result may be output as a text search result.

If the model query is routed and resolved 312 against the LLM, the answers to the query will typically be resolved to entities within the ontology. This may require NLP analysis, to identify the part of speech of the answer. It may also require secondary disambiguation (using the concept definitions available in the ontology) by prompting the LLM to identify precisely in which sense the answer is intended. Accordingly, the method may further comprise: identifying a part of speech of the answer; and identifying a sense in which the answer is intended. In this way, a query result provided by the LLM can be resolved into terms of the ontology to provide the query result.

### Updating the Lexical-Conceptual Ontology

It is preferable that the ontology captures highly stable and conventionalized aspects of language that are unlikely to vary (much) overtime. It is also preferable that these aspects of language are not contextually, regionally, or dialectally dependent.

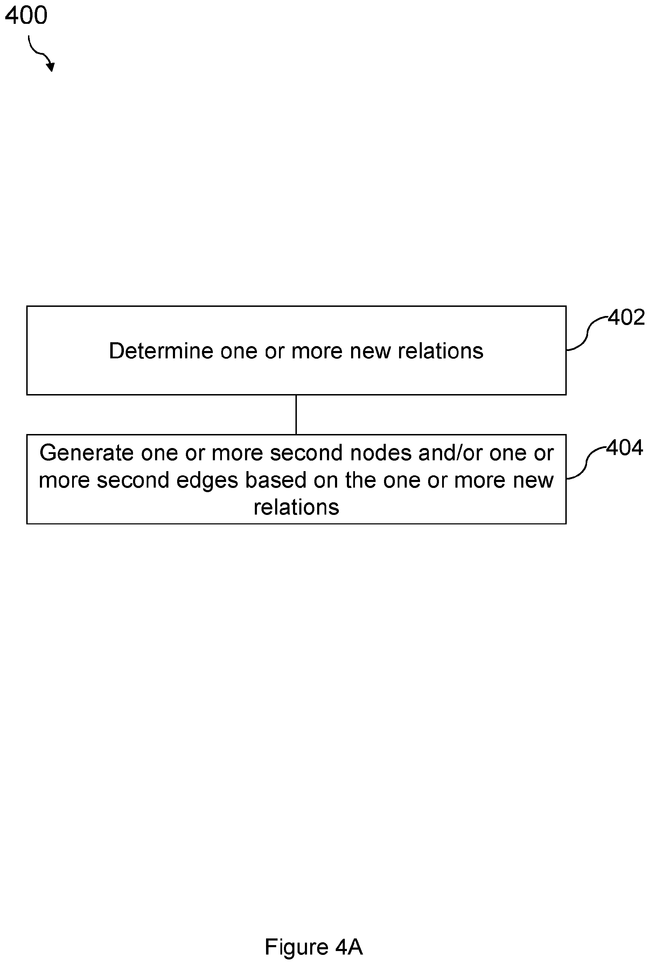

Figure 4A shows an exemplary method 400 for updating the ontology using the system 100.

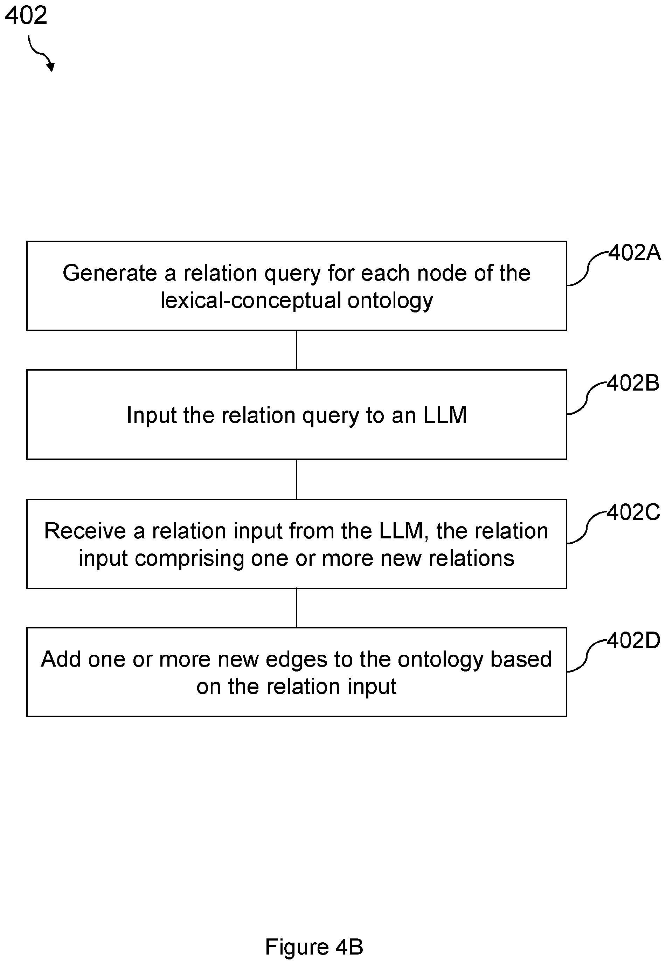

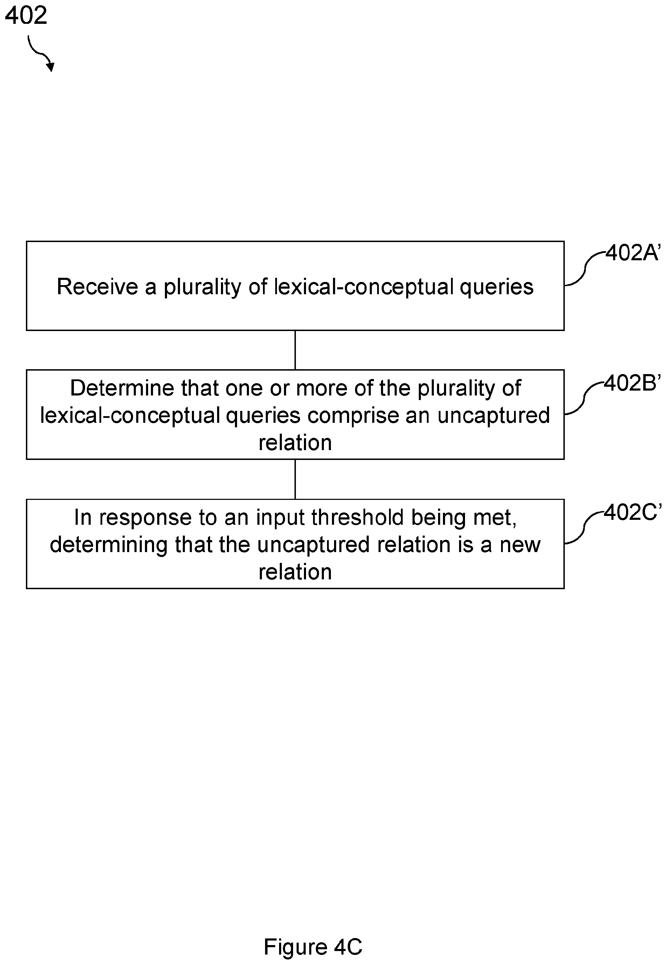

Step 402 comprises determining one or more new relations. Figures 4B and 4C show methods for determining one or more new relations.

Step 404 comprising generating one or more second nodes and/or one or more second edges based on the one or more new relations.

By adding new relations to the ontology, the ontology will, overtime, bring cumulative efficiency gains to the system 100. Additionally, the new relations extend and enrich the ontology with new semantic information.

Figure 4B shows an exemplary method 402 for determining one or more new relations.

The ontology can be embellished and elaborated with information derived from an output provided by the LLM module 106. Information output by the LLM module 106 can extend the graph ontology in structured ways. Additional nodes can be added via existing relation types to existing nodes and/or new relation types can be added. For example, the LLM module output may be used to increase the lexical and/or conceptual coverage of the graph ontology via existing relation (edge) types and/or new relation (edge) types.

Step 402A comprises generating a relation query. The relation query comprises a relation, the relation being a lexical and/or semantic relation; and a source node. The relation query may be converted to a prompt suitable for input to the LLM. This prompt is substantially similar to the prompt generated in step 312A. In fact, the output obtained at step 314 can be used in this method 402.

The relation could be, for example, a rhyme relation. A rhyme is a lexical relationship that is generally stable in the language, and rhyming relations between lemmas can be systematically elicited from the LLM and added as new lexical relations to the conceptual-lexical ontology. Other example relation types that can be used to extend existing ontology structure include: assonances, alliterations, slang words, archaisms, idioms, and/ or constructions.

Step 402A comprises generating a relation query for each source node of the ontology. For example, if the relation query comprises a rhyme lexical relation, a relation query for each lemma and concept within the ontology is generated. Thus, for each lemma in the ontology, a relation query is constructed to elicit information for this lemma from the LLM. For example, for the lemma "sing", a relation query "What words rhyme with the verb 'sing'" can be generated.

Step 402B comprises inputting the relation query to the LLM. The system may input the relation query to the LLM via an API configured to facilitate interaction between the system and the LLM.

Step 402C comprises receiving a relation input from the LLM, the relation input comprising one or more new relations. The one or more new relations may be understood as new edges that were not previously present within the ontology structure. The system may receive the relation input from the LLM via an API configured to facilitate interaction between the system and the LLM. In this step, the output of the LLM is used at the relation input. If the output of the LLM indicates a relation between a source node and a target node that is not currently captured by the ontology, this is considered a new relation. In this way, only non-existing edges would be added as new edges to the ontology in the next step.

Step 402D comprises adding one or more new edges to the ontology based on the relation input. The natural language processing (NLP) module may be used to analyse the relation input to determine the one or more new edges. In particular, the processor 102 may execute the NLP algorithm to extract entities (i.e., lemmas and concepts) from the relation input from the LLM. The processor 102 can then create new edges between the source node and the entities extracted from the relation input, the edges being representative of the relation defined in step 402A.

Further disambiguation may be required to determine the correct entity of ontology. For example, if the relation input comprises "bank" in response to a relation query "what are context domains of 'money?'", then this will need to be matched to the correct entity in the ontology. This is because there may be a plurality of nodes associated with "bank". The processor may utilise the NLP algorithm and sense disambiguation to match the relation input from the LLM to the appropriate entity of the ontology to generate a new edge.

The method 402 may comprise periodically generating 402A and inputting 402B the relation query to the LLM to periodically receive 402C relation inputs from the LLM and add 402D new edges to the ontology. Accordingly, the ontology provides a way of tracking changes in linguistic and conceptual structure over time.

Accordingly, the system may use the LLM to add new relations and enrich the ontology with new semantic information. For example, to add new relational information based on the rhyme lexical relation, the system 100 automatically generates a query or prompt for each lemma and concept of the ontology for input to the LLM based on the rhyme lexical relation. The prompt elicits from the LLM a relation input comprising one or more new entities that are rhyming words for the respective lemmas. New edges are created between the relevant entities (i.e., nodes).

The ontology can be queried quickly and efficiently compared to an LLM. Therefore, it is advantageous to take advantage of information flow from the LLM to the ontology to enshrine certain lexical, conceptual, and relational information initially derivable only from the LLM in the structure of the ontology itself.

Figure 4C shows a further exemplary method 402 for determining one or more new relations. The methods of Figures 4B and 4C are not mutually incompatible and may be performed by the system 100 in parallel.

Step 402A' comprises obtaining a plurality of model queries. The model queries may be received over a time period. The time period is not limited. These model queries may be obtained via the method 300. Thus, querying using the knowledge base also provides a means for enriching the ontology.

Step 402B' comprises determining that one or more of the plurality of model queries comprise an uncaptured relation. The uncaptured relation may be instances of queried words or phrases (for example input in step 304) that express concepts not presently captured by the ontology. The uncaptured relation may also be instances of words or phrases present in the query result, for example as output by the LLM. For example, the uncaptured relation may be specific to a particular organisation or may be a novel concept represented in data provided by the LLM.

Step 402C' comprises, in response to an input threshold being met, determining that the uncaptured relation is a new relation. The threshold may be related to a frequency of occurrence (i.e., how frequently the uncaptured relation is present in the plurality of queries). The threshold may be a minimum number of occurrences. Further thresholds may be envisaged.

Accordingly, if a user or organisation inputs an uncaptured relation frequently enough (if the input threshold is a frequency of occurrence), or if the LLM provides an uncaptured relation as a query result frequently enough, the system 100 will add the uncaptured relation to the ontology.

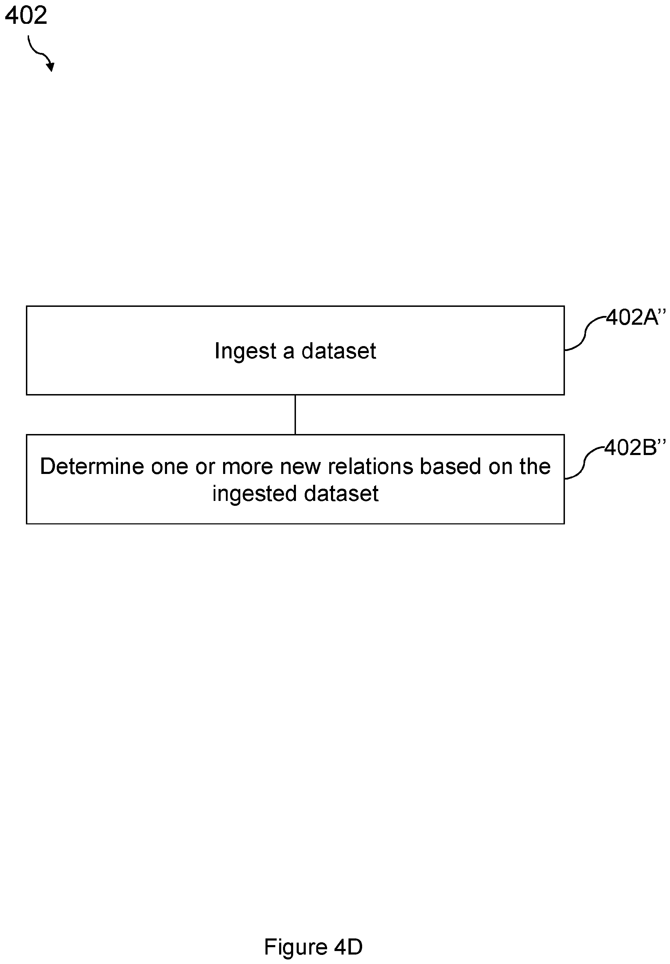

Figure 4D shows a further exemplary method 402 for determining one or more new relations. The methods of Figures 4B, 4C, and 4D are not mutually incompatible and may be performed by the system 100 in parallel.

Step 402A" comprises ingesting a dataset. The dataset is a discrete collection of text data.

Step 402A" may be achieved using known data ingesting means. Ingesting the dataset may comprise extracting data from a source system using an API. It will be appreciated that the dataset may be stored on local storage device or a cloud storage device. Ingesting the dataset may comprise one or more further steps such as data transformation, but this is not limited.

Step 402B" comprises determining the one or more new relations based on the ingested dataset. More particularly, the one or more new relations are derived from the ingested dataset.

The one or more new relations are determined using named entity recognition and entity extraction and/or the vector-based language model. New lemmas and concepts (i.e., nodes) can be added using named entity recognition and entity extraction. Relational information can be identified using the LLM, for example via the method 402 of Figure 4B. In particular, the processor 102 can identify and generate new edges connected to the new nodes by querying the LLM to determine relational information.

The method 402" for determining one or more new relations of Figure 4D may be applied to a locally stored ontology. The term "locally stored ontology" may refer to an ontology that is unique to a particular entity, such as an organisation. Thus, an organisation may input a dataset to be ingested, and the locally stored ontology can be updated based on the ingested dataset. The locally stored ontology can comprise new nodes and new edges, but these new edges may still connect the new nodes to nodes already present in the ontology.

The ontology can therefore be distinguishable into two parts: a "core" ontology and "sub-ontologies". The core ontology belongs to the query system 100 as a whole and is always available for use in answering any query. The sub-ontologies are part of an "modular data model", built from organisation, project, or user-specific datasets (e.g., the dataset ingested in step 402A"), and may thus be available for use only by permitted users or entities in answering relevant queries. Such sub-ontologies mimic the structure of the core ontology but include content and relational information that is derived from ingested datasets, as discussed in step 402B".

Thus, the system 100 is capable of dynamically constructing (i.e., constructing through use) graph representations of relationships of pre-defined specific types between concepts and words, independent of the source of that information. The source of the information (the content of the nodes) could be the ontology in the local sense (which captures certain specific kinds of information), or it could be a large language model (which captures other certain specific kinds of information), or indeed both.

### Querying a Dataset using the Knowledge Base

The knowledge base (i.e., the ontology and the LLM) may be used to query a dataset. For example, the dataset may be one or more documents to be queried. The dataset comprises unstructured text data. The dataset does not require tabular or structured quantitative data. The dataset may be of a substantial size.

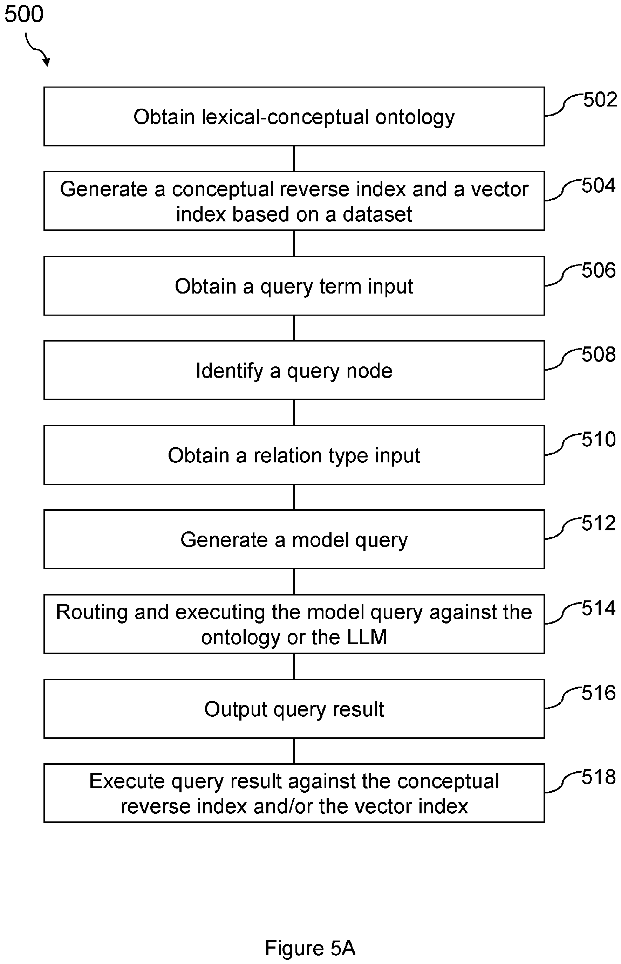

Figure 5A shows an exemplary method 500 for querying a dataset using the knowledge base (i.e., the ontology and the LLM) according to an embodiment of the invention.

In the following description of the method 500, an example implementation is used wherein the dataset comprises a plurality of medical knowledge documents, and a user wishes to query the dataset to find the components of a knee joint.

Step 502 comprises obtaining the knowledge base and is substantially similar to step 302 of the method 300.

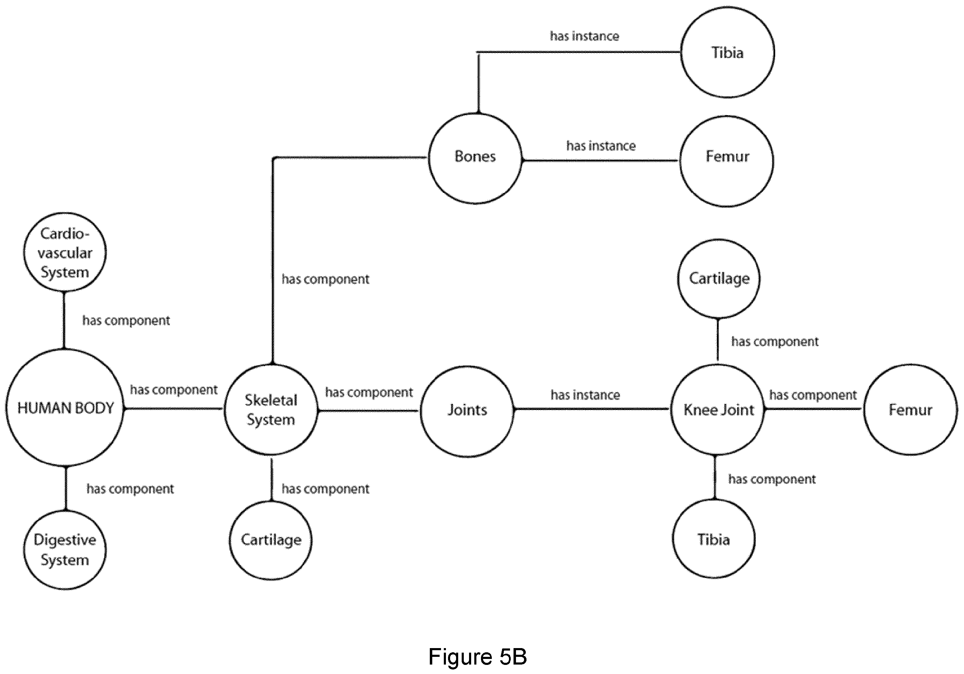

In relation to the present example, Figure 5B shows an example ontology comprising a plurality of nodes and a plurality of relations. The example ontology comprises content related to aspects of the human body. It will be appreciated that this ontology comprises a small portion of the overall content of the human body, and the ontology would be significantly larger and more complex. It will be appreciated that the ontology of Figure 5B is for illustrative purposes.

Step 504 comprises comprise generating a conceptual reverse index and a vector index based on the dataset. The conceptual reverse index comprises one or more conceptual identifiers represented as strings. The vector index is a data structures that stores vector representations of words present in the dataset with a locational index for retrieving those words, and their contexts, from the documents of the dataset.

Generating the vector index comprises: assigning a unique vector representation to each text portion present in the ingested dataset; and assigning a locational reference to each text portion present in the ingested dataset. Thus, each text portion has a unique vector representation and a locational reference. Assigning the unique vector representations may be achieved using known word embedding techniques.

Generating the conceptual reverse index comprises: determining a concept associated with each text portion present in the dataset; and collating one or more text portions having the same concept under a shared conceptual identifier. For example, the words "cat" and "feline" in two sentences like "the cat is in the hat" and "the feline is in the hat" would be indexed according to the same conceptual identifier.

Determining a concept associated with each text portion present in the one or more documents of the dataset comprises identifying one or more nodes of the ontology corresponding to the text portion.

If more than one node is associated with the text portion (i.e., if the portion of text has multiple conceptual meanings), a prompt may be generated for input to the LLM to determine the concept. For example, the text portion may comprise the term "bank", which may be associated with a plurality of nodes of the ontology. In this case, a prompt may be generated for input to the LLM to determine which node is the most likely node (i.e., the node that matches the true meaning of the text portion). The prompt may be, for example "for the word "bank" in the context of "Y", which of the following definitions most accurately characterizes its meaning? [a list of the possible sense definitions of "bank"]". The list of possible sense definitions of "bank" corresponds to the plurality of nodes. The LLM output provides the most likely node, which is determined as the concept associated with the text portion.

Step 504 may also comprise ingesting the dataset by extracting data from a source system using an API. Ingesting the dataset may comprise one or more further steps such as data transformation, but this is not limited. Data from the dataset is uploaded to a local storage device and/or a cloud-based storage device, but this is not limited.

Continuing with the present example, step 504 comprises ingesting the plurality of medical knowledge documents.

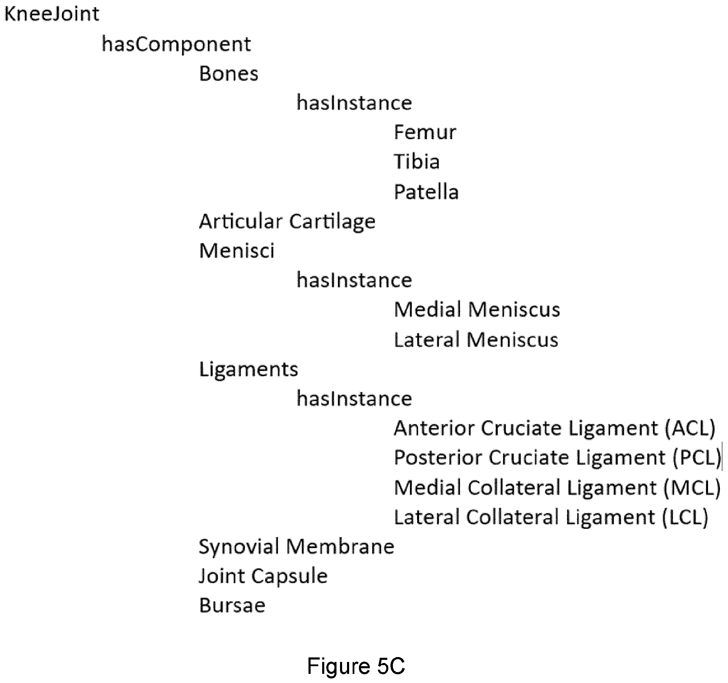

It will be appreciated that step 504 may facilitate step 402A" of the ontology updating method 400. Continuing with the present example, the system 100 may determine that a plurality of new relations are extractable from the ingested dataset. Figure 5C shows a new sub-graph of the ontology depicted in Figure 5B, including the plurality of new relations following the update 506 of the ontology based on the ingested dataset. The sub-graph comprises second nodes "Bones", "Articular Cartilage", "Menisci", "Medial Meniscus", "Lateral Meniscus", "Ligaments", "Anterior Cruciate Ligament (ACL)", "Posterior Cruciate Ligament (PCL)", "Medial Collateral Ligament (MCL)", "Lateral Collateral Ligament (LCL)", "Synovial Membrane", "Joint Capsule", "Bursae". It will be appreciated that the sub-graph of Figure 5C is for illustrative purposes only.

Thus, steps 504 and 402 provide a means for incorporating user-uploaded data (i.e., the dataset). The dataset is incorporated in a way that is specific to, and only available to, the user (or users having access to the same ontology). Furthermore, the dataset is ingested in a manner that allows user(s) to query the dataset using the ontology.

Steps 506 is substantially similar to step 304 and comprises obtaining a query term from a user. Step 508 is substantially similar to step 306 and comprises identifying a query node based on the query term. Step 510 is substantially similar to step 308 and comprises obtaining a relation type. Step 512 is substantially similar to step 310 and comprises generating a model query.

Continuing with the present example, the user may input the query term "what components does a knee joint have?" at step 304. The processor 102 would identify the query node to be "knee joint" at step 508. The one or more processors 102 would obtain the relation type "has component" at step 510 based on the query term. The processor 102 would generate the model query based on the query node "knee joint" and the relation type "has component" in step 512. The system 100 therefore generates the model query "kneejoint hascomponent" comprising the source entity "kneejoint" and relation (i.e., edge) type "hascomponent". This model query can be represented by a partial ontology fragment "kneejoint hascomponent".

Step 514 comprises resolving the model query against the ontology or the LLM based on the model query. Step 514 is substantially similar to step 312, which is not repeated for the sake of brevity. In this example, the model query comprises a relationship that is captured by the ontology and as such, the model query is routed and resolved against the ontology.

Step 516 comprises outputting a query result. Step 516 is substantially similar to step 314, which is not repeated for the sake of brevity. Continuing with the present example, in response to the "kneejoint hascomponent" model query, the system 100 outputs the sub-graph of Figure 5C. The query result therefore comprises a plurality of nodes of the ontology.

Step 518 comprises executing the query result against the conceptual reverse index and/or the vector index to generate one or more text results. The one or more text results are portions of text within the ingested dataset. The one or more text results typically also have locational references.

Executing the query result against the conceptual reverse index and/or the vector index comprises: determining one or more concepts of the query result; and identifying one or more portions of text having conceptual identifiers corresponding to the one or more concepts.

The query result can be resolved as a search against the conceptual reverse index and/or the vector index, or both, depending on the query type. In particular, some of the information that is respondent to the model query is stored in the ontology, and some is derivable from the LLM. For example a 'hyponyms' relation is typically serviced by the ontology, but an 'image associations' relation is typically serviced by the LLM.

For example, the query term "connotations of music" in step 506 can produce a query result of the concepts ("joy", "creativity") in step 516. Executing this query result against the conceptual reverse index and/or the vector index would generate one or more text results that have the conceptual identifiers of "joy" and "creativity". Notably, the matches are based on the conceptual identifiers rather than literal string matches.

If it is possible to reconcile the result of an LLM query to entities within the ontology, the semantically enriched reverse index can be used for the index query. If not, the vector index must be used (because it has not been possible to obtain a concept identifier from the ontology).

The conceptual reverse index and the vector index can therefore function as a domain-specific ontology for query answering.

The results of the data query, particularly when robust metadata has been indexed as part of the data ingestion process, can also be subject to statistical analysis and thus can support data analytics methodologies such as document clustering, geographical or demographic faceting, and sentiment analysis (as well as raw text search).

The model query (such as the model query of Figure 3B) is resolved prior to matching against organisational data indexes. By resolving a model query like "adjective descriptors of hyponyms of animal" into terms suitable for execution against the ontology, and thus also into terms that have been indexed, performing highly complex, multi-term queries can see significant improvements in processing efficiency. If the query was resolved against a stand-alone vector index or a stand-alone reverse index, rather than being resolved against both the vector index and the reverse index, the system would struggle to handle even simplified forms of this query. This is because literal keyword querying systems have no concept whatsoever of relational queries. Furthermore, vector querying systems which resolve a query term to its vector representation may only recognize the relation of 'semantic similarity' or 'nearest neighbour'.

In particular, the example model query comprises a first sub-query 'hyponyms of animal' that would be routed and resolved against the ontology to provide a query result comprising nodes such as "giraffe", "lion", "cat", "dog", and "elephant". The model query also comprises a second sub-query representative of adjective descriptors of these nodes and would be routed and resolved against the LLM. Thus, this query is in fact a tiered query that matches the adjective descriptors for each of the hyponyms of animal. The query is `resolved' by the model in the sense that the specific nodes that will be matched against the index are not given by the user but are 'obtained' from the ontology and/or LLM before being resolved against the index.

If the query was resolved against a stand-alone vector index or a stand-alone reverse index, rather than being resolved against both the vector index and the reverse index, the system would struggle to handle even simplified forms of this query. This is because literal keyword querying systems have no concept whatsoever of relational queries. Furthermore, vector querying systems which resolve a query term to its vector representation may only recognize the relation of 'semantic similarity' or 'nearest neighbour'.

The resolution of complex query structures to entities of the ontology, which are, at the same time, the 'indexed' entities of the modular data model, can produce a technical effect of improving computational efficiency (discussed further with reference to step 512). For example, the requirements of the hardware system on which the method 500 is resolved may be reduced.

The method 500 for querying a dataset using the knowledge base provides a technical improvement over keyword-based search systems at least in terms of the computations demands of the underlying hardware system. As an example, take a complex multi-term query like the one illustrated in Figure 3B. The query is read as 'connotations of image associations of search'. The user wants to find concepts that are associated with any of the images commonly associated with the concept 'search'.

The computational demands of the underlying hardware system can be represented in terms of the number of queries required of a comprehensive search using a keyword-based literal string-matching search system, multiplied by the time required for each search. Continuing with the example, the number of image associations of "search" is 5, each image association has 8 connoted concepts, and each connoted concept has 5 literal word and phrase expressions. Thus, to find all possibilities within a given dataset (e.g., a set of queried documents), the literal string-matching search system requires 8 * 5 * 5 = 200 discrete queries of the index. For a dataset of significant size, each query can take around 3 seconds. Thus, the time taken to adequately execute this query using the keyword-based search system can be 600 seconds.

By contrast, the input query "connotations of image associations of search" may be queried against the indexes as a single query, because the input query is resolved by the system 100 into terms that can be matched in the indexes. Accordingly, querying a dataset using the ontology provides reduced computational demands on the underlying hardware system. It should be noted that the above calculation does not consider the user's time and effort required to discover the image associations of search, the connoted concepts of these images, and the words and phrases expressing these concepts, all of which is handled automatically by the dataset querying method 500 of the present disclosure.

Continuing the above example of the query "connotations of image associations of search", a compound Boolean query could be prepared that captures all possible surface linguistic expressions of all the connoted concepts of all the image associations of search. This query could reduce the search time and thus the computational demands of such a querying process. However, literal string-matching search engines handle such compound Boolean queries by aggregating results of discrete searches (as if a user had searched for each term individually) and consolidating the results. Whilst computational time may be reduced, the overall query time is still high due to the time investment required from the user. Thus, the overall execution time for such a query can be prohibitive.

A large language model (LLM) may be more efficient than a standard reverse index system for this type of query. However, because of the way that LLM's are trained and the way in which they generate "results", vector based LLMs do not have a concept of a source document in the same way that a reverse index does. This is why LLMs 'hallucinate' information sources. An LLM does not produce a result by matching a query against indexed source documents, but generates text on the fly through, in effect, statistical probabilities. Therefore, whilst prompting an LLM for 'connotations of image associations of search' may produce the concepts that are connoted by each of the image associations of search, this is not the same as searching for exact "hits" (matches) of expressions of these concepts in a defined dataset of one or more documents. The method 500 for querying a dataset using the knowledge base (i.e., the ontology and the LLM) ontology is therefore superior to an LLM with respect to the capabilities of outputting exact matches.

## Claims

1. A computer-implemented querying method using a knowledge base, the computer-implemented method comprising:
obtaining the knowledge base comprising:
a large language model (LLM); and
lexical-conceptual ontology data representative of a lexical-conceptual ontology comprising a plurality of nodes and a plurality of edges connecting the nodes;
wherein the plurality of nodes represent lemmas and concepts; and
wherein the plurality of edges represent relation types between the nodes;
obtaining a model query;
resolving the model query against the lexical-conceptual ontology and/or the LLM based on the model query; and
outputting a query result.

2. The computer-implemented method of claim 1, wherein obtaining the model query comprises:
obtaining a query term;
identifying a query node based on the query term;
obtaining a relation type; and
generating the model query, the model query comprising:
the query node; and
the relation type.

3. The computer-implemented method of claim 2, wherein resolving the model query against the LLM comprises:
generating a prompt based on the query node and relation type; and
executing the prompt against the LLM.

4. The computer-implemented method of any preceding claim, further comprising, after resolving the model query against the LLM:
resolving the query result into terms of the lexical-conceptual ontology.

5. The computer-implemented method of any preceding claim, wherein resolving the model query against the lexical-conceptual ontology and/or the LLM based on the model query comprises:
determining whether to resolve the model query against the lexical-conceptual ontology or the LLM by:
determining a query type variability of the query type of the model query; and
resolving the model query against the LLM if the query type variability of the query type is greater than or equal to the query type variability threshold or resolving the model query against the lexical-conceptual ontology if the query type variability of the query type is less than the query type variability threshold.

6. The computer-implemented method of claim 5, wherein determining the query type variability of the query type of the model query comprises:
obtaining a plurality of responses to the query type, each response corresponding to a different time period; and
determining the query type variability based on the plurality of responses.

7. The computer-implemented method of any preceding claim, further comprising:
generating a conceptual reverse index and a vector index based on an ingested dataset; and
executing the query result against the conceptual reverse index and/or the vector index to generate one or more text results.

8. The computer-implemented method of claim 7, wherein generating the conceptual reverse index comprises:
determining a concept associated with each text portion present in the ingested dataset; and
collating one or more text portions having the same concept under a shared conceptual identifier.

9. The computer-implemented method of claim 8, wherein determining a concept associated with each text portion present in the dataset comprises identifying one or more nodes of the lexical-conceptual ontology corresponding to the text portion.

10. The computer-implemented method of any of claims 7 to 9, wherein generating the vector index comprises:
assigning a unique vector representation to each text portion present in the ingested dataset; and
assigning a locational reference to each text portion present in the ingested dataset.

11. The computer-implemented method of any of claims 7 to 10, wherein executing the query result against the conceptual reverse index and/or the vector index comprises:
determining one or more concepts of the query result; and
identifying one or more portions of text having conceptual identifiers corresponding to the one or more concepts.

12. The computer-implemented method of any preceding, further comprising updating the lexical-conceptual ontology, wherein updating the lexical-conceptual ontology comprises:
determining one or more new relations; and
generating one or more second nodes and/or one or more second edges based on the one or more new relations.

13. The computer-implemented method of claim 12, wherein updating the lexical-conceptual ontology is in response to:
an LLM output;
a plurality of model queries; and/or
ingestion of a dataset.

14. A querying system for querying using a knowledge base, the system comprising:
processor;
a lexical-conceptual ontology database communicatively coupled to the processor and storing a lexical-conceptual ontology data thereon, the lexical-conceptual ontology data representing a lexical-conceptual ontology comprising a plurality of nodes and a plurality of edges connecting the nodes;
wherein the plurality of nodes represent lemmas and concepts; and
wherein the plurality of edges represent relation types between the nodes;
a large language model (LLM) module communicatively coupled to the processor; and
a storage unit communicatively coupled to the processor and storing processor-executable instructions thereon that, when resolved by the processor, cause the system to carry out the steps of any preceding claim.
